# EUROPEAN PATENT SPECIFICATION

(11) **EP 3 995 289 B1**
(45) Date of publication and mention of the grant of the patent: **11.01.2023**
(21) Application number: 20206480.4
(22) Date of filing: 09.11.2020
(51) Int. Cl.: B29C 64/118, B29C 64/209, B29C 64/227, B29C 64/336, B33Y 10/00, B33Y 30/00, B33Y 70/00, B33Y 80/00, B60H 1/00, B62D 25/14

(54) **METHOD OF PRODUCING A MOTOR-VEHICLE DASHBOARD**
VERFAHREN ZUR HERSTELLUNG EINES KRAFTFAHRZEUGARMATURENBRETTS
PROCÉDÉ DE PRODUCTION D'UN TABLEAU DE BORD DE VÉHICULE À MOTEUR

(43) Date of publication of application: 11.05.2022
(73) Proprietor: C.R.F. Società Consortile per Azioni, 10043 Orbassano (Torino) (IT)
(72) Inventor: BASSAN, Daniele, 10043 Orbassano (Torino) (IT); CARCIOFFI, Carlo, 41121 Modena (IT)
(74) Representative: Notaro, Giancarlo

(56) References cited:
- EP-A1- 3 508 399
- FR-A1- 3 088 610
- US-A1- 2019 161 031
- US-B1- 6 409 590

## Description

### Field of the invention

The present invention relates to a manufacturing method for a motor-vehicle dashboard carried out by means of additive manufacturing technology.

In the present description and in the claims that follow, the term "additive manufacturing" means a method, known in the art, in which an energy source is used, such as a laser or plasma beam, to selectively melt layers of powders or sheets of metal material or plastic material, of various sizes, so as to form layer after layer, a component of metal material or plastic material.

For example, a device for making components using additive manufacturing is known from the document EP 3148784 A1**,** while the European patent application EP 3470248 A1 in the name of the same applicant illustrates an application example of the construction technique described above in the field of motor-vehicle suspensions. Documents EP 3 508 399 A1 and FR 3 088 610 A1 disclose methods for producing a dashboard of a motor-vehicle by means of additive manufacturing technology. EP 3 508 399 A1 discloses in particular a monolithic dashboard for a motor-vehicle incorporating a longitudinal hollow bearing-element defining a central ventilation channel, designed to receive further channeling elements of a conditioning system and to perform a function of structural reinforcement.

### Object of the invention

The object of the present invention is to propose a method for producing a motor-vehicle dashboard that achieves the following objectives:
- extremely reduced time to market, starting from the design phase,
- possibility of introducing variants and customizations from one batch/component to another, compared to a basic model;
- reduction of investments (to create variants), resulting particularly suitable for the typical production rates of the automotive sector, for products with low production volume and high added value (premium segment).

Another object of the present invention is to provide a method of the type indicated above which allows production of a dashboard that satisfies the necessary rigidity requirements and that is equipped with all the functional sub-assemblies, without having to resort to further assembly operations, subsequent to those for producing the casing and the outer covering.

### Summary of the invention

In order to achieve these objects, the invention relates to a method of the type indicated at the beginning of the present description, wherein the following steps are envisaged:
- setting up of a robotic deposition system for a plurality of materials with fused deposition modeling (FDM^{™}) technology,
- preparing a construction plane associated with said robotic system, on which to deposit said plurality of materials, in such a way as to produce said dashboard,
- operating said robotic system so as to start a step of depositing said plurality of materials to produce a first end of the dashboard, and to continue depositing the materials by creating a succession of different layers, alternating materials with different types of filaments, comprising at least one material with structural characteristics and at least one material with sound-absorbing characteristics,
- wherein said succession of different layers is performed proceeding from said first end along a direction substantially corresponding to the longitudinal axis of the dashboard, and
- continuing to operate said robotic system so as to produce said dashboard as a single monolithic element made of different materials, comprising a casing incorporating a longitudinal hollow bearing-element defining a central ventilation channel, designed to receive further channeling elements of a conditioning system and to perform a function of structural reinforcement of said dashboard.

In one or more embodiments, said succession of different layers is performed according to the following steps:
- depositing a first layer of said hollow bearing-element made of material with sound-absorbing characteristics, wherein said first layer defines a first section of the hollow bearing-element,
- depositing a first outer layer made of material with structural reinforcement characteristics, spaced around said first layer of said hollow bearing-element,
- proceeding by making a second section of the hollow bearing-element by depositing a second outer layer of said hollow bearing-element made of material with structural reinforcement characteristics,
- completing the production of said second section of the hollow bearing-element by depositing a second layer of said hollow bearing-element made of material with sound-absorbing characteristics, inside said second outer layer of the hollow bearing-element, and
- continuing to make successive sections of said hollow bearing-element following the aforesaid sequence, so as to start a new section using the last material used to complete the previously-made section, between said material with structural reinforcement characteristics and said material with sound-absorbing characteristics.

### Description of preferred embodiments of the invention

Further characteristics and advantages of the present invention will become apparent from the description that follows with reference to the attached drawings, provided purely by way of non-limiting example, wherein:
- Figure 1 illustrates a step of the production method according to the present invention,
- Figure 2 is a perspective view of a component of the dashboard formed by the method according to the invention, and
Figures 3, 4 are, respectively, a perspective view and a cross-sectional transverse view of a motor-vehicle dashboard formed by the method according to the invention.

In the following description, various specific details are illustrated aimed at a thorough understanding of examples of one or more embodiments. The embodiments can be implemented without one or more of the specific details, or with other methods, components, materials, etc. In other cases, known structures, materials, or operations are not shown or described in detail to avoid obscuring various aspects of the embodiments.

The reference to "an embodiment" in the context of this description indicates that a particular configuration, structure or characteristic described in relation to the embodiment is included in at least one embodiment. Therefore, phrases such as "in an embodiment", possibly present in different places of this description do not necessarily refer to the same embodiment. Moreover, particular conformations, structures or characteristics can be combined in a suitable manner in one or more embodiments and/or associated with the embodiments in a different way from that illustrated here, for example, a characteristic here exemplified in relation to a figure may be applied to one or more embodiments exemplified in a different figure.

The references illustrated here are only for convenience and do not therefore delimit the field of protection or the scope of the embodiments.

In the attached drawings, reference 1 indicates - in its entirety - a motor-vehicle dashboard made by means of a production method according to the present invention.

In the case of the invention, the dashboard 1 is made by means of additive manufacturing technology, providing a robotic system 2 for depositing a plurality of materials with FDM^{™} ("fuse deposition modeling") technology.

According to the prior art, the robotic system 2 comprises an anthropomorphic robot having a base and a column rotatably mounted on the base about a first axis directed vertically. The robot has an arm 10 mounted on the column 42 articulated about a second axis directed horizontally. The reference 20 designates a forearm mounted on the arm 20. The forearm 20 is articulated about a third axis, which is also directed horizontally; the forearm 20 also has the possibility of rotating about its longitudinal axis. The forearm 20 of the robot is provided at its end with a wrist 21, opposite to the arm, said wrist mounted with the possibility to rotate about two mutually orthogonal axes. According to a per se known technique, each of the six axes of the robot is controlled by a respective electric motor, through a respective gearbox. The electric motors of the robot are controlled by an electronic control unit in a per se known manner. In accordance with a per se known technique, at the distal end of the wrist 21 of the robot, there is a flange for attaching an operating head 22 designed to deposit a plurality of materials, with a system for selecting the filament of the material that is intended to be used.

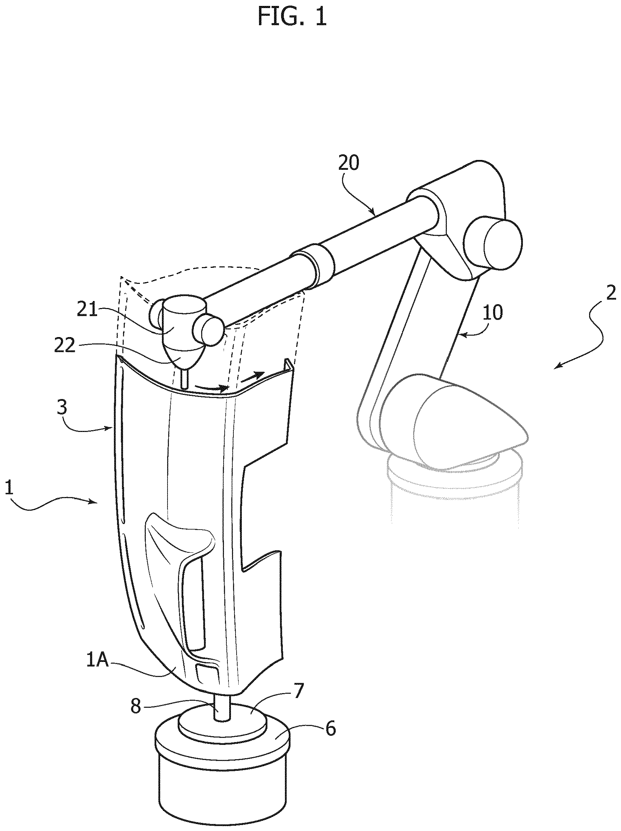

In accordance with what is illustrated - schematically - in Figure 1, a construction plane 6 is associated with the robotic system 2, on which to make the dashboard 1 by depositing the materials of which it is made. The plane 6 comprises one or more block elements 8, arranged to keep the dashboard 1 in a determined position during the construction steps.

In one or more embodiments of the invention, as illustrated in Figure 1, the growth direction of the deposited material is substantially vertical, substantially along the longitudinal axis of the dashboard 1, so that the dashboard is formed in a vertical position, supported by the aforesaid one or more block elements 8. Thanks to this characteristic it is possible to limit unwanted deformations of the molten material due to gravity, during deposition of the material.

Preferably, the construction plane 6 is equipped with a rotatable table 7 designed to orientate the dashboard 1 during its construction, so as to facilitate the material deposition step performed by the operating head 22 and to limit the movements of the robotic system 2 and of the operating head 22.

In the case of the invention, the aforesaid robotic system 2 may be operated to initiate a step of depositing a plurality of materials constituting the dashboard 1, starting from one end of the dashboard 1A, by means of a succession of different layers, alternating materials with filaments of a different type, in particular at least one material with structural characteristics and at least one material with sound-absorbing characteristics.

According to an additional characteristic of the invention, the aforesaid succession of the different layers is performed by making a plurality of sections of the dashboard having a respective main plane perpendicular to the longitudinal axis of the dashboard 1 and proceeding from the first end 1A of the dashboard along a direction substantially corresponding to the longitudinal axis of the dashboard 1.

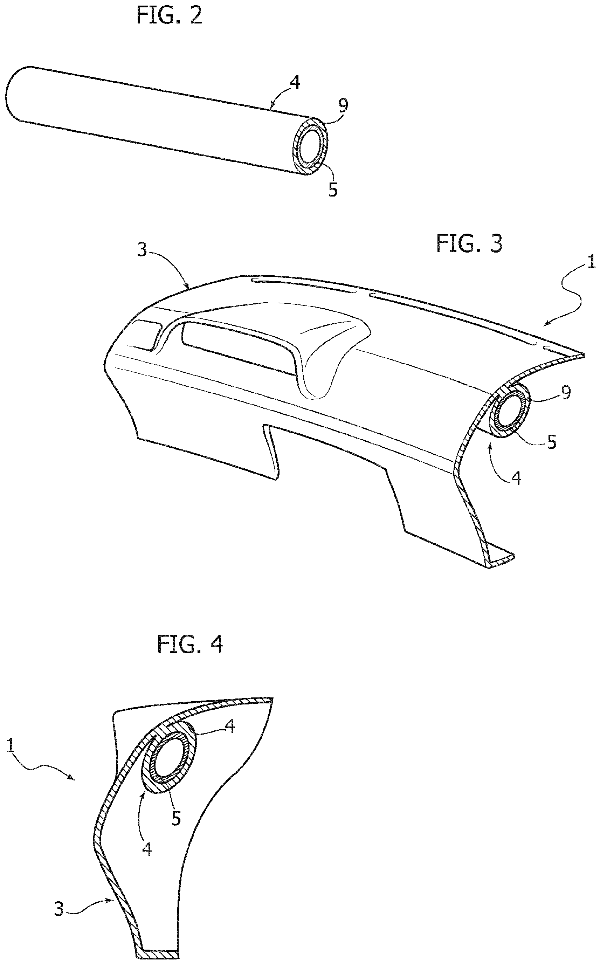

In one or more embodiments, alternating the materials needed to make the different components of the dashboard 1, the dashboard 1 is made as a single monolithic element (made of a single piece) of different materials, comprising a casing 3 and incorporating a longitudinal hollow bearing-element 4 defining a central ventilation channel (Figures 2, 3). This central ventilation channel is designed to receive additional channeling elements of an air conditioning system (not illustrated in the attached drawings) and also to perform a structural reinforcement function of the dashboard 1.

Application of the materials can be done continuously during the construction of the respective components and the casing 3 of the dashboard, locally varying the material used, in order to optimize the characteristics of each component and the necessary characteristics of lightness.

The dashboard 1 is made as a monolithic component without distinction between the inner framework and the covering, using different materials and achieving optimal adhesion between the layers of which it is made. It should therefore be noted that, in accordance with the invention, there are no separate single components typical of a dashboard structure according to the conventional technique, but rather a general monolithic reticular structure, equipped with all functional subgroups, which guarantees characteristics of extreme lightness.

In the case of the invention, the dashboard 1 is made by locally varying the material used and comprises a first material with structural characteristics 9 and a second material with sound-absorbing characteristics 5. The material change operations necessary to produce the dashboard are performed with maximum efficiency, reducing wasted time, in order to optimize the production cycle time.

According to a first embodiment, the dashboard is made by means of a succession of different layers, performed according to the following steps:
- depositing a first layer of the hollow bearing-element 4 made of material with sound-absorbing characteristics 5, wherein said first layer defines a first section of the hollow bearing-element 4,
- depositing a first outer layer made of material with structural reinforcement characteristics 9, spaced around said first layer with sound-absorbing characteristics.
- proceeding by making a second section of the hollow bearing-element 4 by depositing a second outer layer of said hollow bearing-element made of material with structural reinforcement characteristics 9,
- completing the production of said second section of the hollow bearing-element 4 by depositing a second layer of said hollow bearing-element made of material with sound-absorbing characteristics 9, inside said second outer layer with structural reinforcement characteristics 5,
- continuing to make the successive sections of said hollow bearing-element 4 following the aforesaid sequence, so as to start a new section using the last material used for the previously-made section of the hollow bearing-element 4, between said material with structural reinforcement characteristics and said material with sound-absorbing characteristics.

Once the construction of the hollow bearing-element 4 has been completed, the method according to the invention envisages another step to make the casing 3 made of a material with structural reinforcement characteristics, around the hollow bearing-element 4.

According to another embodiment of the invention, the aforesaid succession of different layers can be performed according to the following steps:
- depositing a plurality of layers made of material with sound-absorbing characteristics 5, defining the entire inner surface of said hollow bearing-element 4,
- completing the construction of said hollow bearing-element 4, depositing a plurality of layers made of material with structural reinforcement characteristics 9 around said layers made of material with sound-absorbing characteristics 5, forming the entire outer surface of said hollow bearing-element 4,
- depositing a plurality of layers forming the casing 3 of the dashboard 1, around said hollow bearing-element 4, and
- depositing another covering layer on said casing 3.

In one or more embodiments of the invention, in order to create a monolithic body equipped with all the necessary structural and functional characteristics, the materials deposited by the robotic system 2 may include:
- a first filament with structural characteristics;
- a second filament with functional sound-absorbing characteristics to absorb vibrations and noises; and
- a third filament, in long fiber, with structural characteristics superior to those of said first filament.

Preferably, to carry out the material change, the robotic system 2 is equipped with a multi-material deposition operating head 22 with a filament selection system. Alternatively, it is possible to provide a material change assembly associated with an operating head or a tool change system with replacement of the head.

In one or more embodiments of the invention, the robotic system comprises a first and a second robot configured to carry out cooperative operations for producing the dashboard with a plurality of materials at the same time, so as to simultaneously form the casing 3, the functional subassemblies and the longitudinal hollow bearing-element 4.

According to a further preferred characteristic of the invention, it is possible to envisage - at the end of the dashboard forming step - a step of depositing a covering material on the dashboard casing, such as, for example, a carbon fiber composite material or a material in continuous fiber.

According to an additional preferred characteristic of the invention, the step of depositing a covering material can be performed during one of the previously indicated steps. The transition from one material to another can be obtained by means of an automatic fiber cutting system that allows replacement of the material or the head.

According to another preferred characteristic of the invention, the aforesaid covering material is another reinforcement material deposited following the maximum load lines of the formed component, in accordance with the design specifications.

Preferably, during the deposition step of the different materials, the method involves the step of inserting local reinforcing elements, for example, of metallic material, designed to facilitate the anchoring of the subsequent layers to be deposited by means of the robotic system 2.

Preferably, during the deposition phase of the different materials, the method involves the step of inserting actuators (for example, of the piezoelectric type) to allow the production of functional components, for example, openable drawers incorporated within the overall structure of the dashboard 1.

Furthermore, it is possible to prepare an airbag housing area coated with a long fiber composite material in order to locally improve the performance of resistance and stiffness. The ends of the dashboard can be subsequently reinforced with reinforcing elements (for example, made of metal) designed to provide coupling points for mounting the dashboard 1 on a motor-vehicle body. These metal reinforcements may be inserted with the same robotic system 2 described above or with a dedicated robotic system.

In all the embodiments described above, the method according to the invention is particularly suitable for forming a dashboard of a motor-vehicle characterized by a monolithic component with local variation of material, so as to satisfy the structural and functional requirements that components of this type must respect.

## Claims

1. A method for producing a dashboard (1) of a motor-vehicle by means of additive manufacturing technology, wherein the following steps are envisaged:
- arranging a robotic deposition system (2) for a plurality of materials with fused deposition modeling FDM^{™} technology,
- preparing a construction plane (6) associated with said robotic system (2), on which to deposit said plurality of materials, in such a way as to produce said dashboard (1),
- operating said robotic system (2) so as to start a step of depositing said plurality of materials to produce a first end (1A) of the dashboard (1), and to continue depositing the materials by creating a succession of different layers, alternating materials with different types of filaments, comprising at least one material with structural characteristics (9) and at least one material with sound-absorbing characteristics (5),
- wherein said succession of different layers is performed proceeding from said first end (1A) along a direction substantially corresponding to the longitudinal axis of the dashboard (1), and
- continuing to operate said robotic system (2) so as to produce said dashboard (1) as a single monolithic element made of different materials, comprising a casing (3) incorporating a longitudinal hollow bearing-element (4) defining a central ventilation channel, designed to receive further channeling elements of a conditioning system and to perform a function of structural reinforcement of said dashboard (1).

2. A method according to claim 1, wherein said succession of different layers is performed according to the following steps:
- depositing a first layer of said hollow bearing-element (4) made of material with sound-absorbing characteristics (5), wherein said first layer defines a first section of the hollow bearing-element (4),
- depositing a first outer layer made of material with structural reinforcement characteristics (9), spaced around said first layer of said hollow bearing-element (4),
- proceeding by making a second section of the hollow bearing-element (4) by depositing a second outer layer of said hollow bearing-element (4) made of material with structural reinforcement characteristics (9),
- completing the production of said second section of the hollow bearing-element (4) by depositing a second layer of said hollow bearing-element (4) made of material with sound-absorbing characteristics (5), inside said second outer layer of the hollow bearing-element (4), and
- continuing to make successive sections of said hollow bearing-element (4) following the aforesaid sequence, so as to start a new section using the last material used to complete the previously-made section, between said material with structural reinforcement characteristics (9) and said material with sound-absorbing characteristics (5).

3. A method according to claim 2, wherein said method comprises the step of producing a casing (3) with a structural reinforcing material, around said hollow bearing-element (4).

4. A method according to claim 1, wherein said plurality of materials comprises:
- a first filament with structural characteristics;
- a second filament with functional sound-absorbing characteristics to absorb vibrations and noises; and
- a third filament, in long fiber, with structural characteristics superior to those of said first filament.

5. A method according to claim 1, wherein said succession of different layers is performed according to the following steps:
- depositing a plurality of layers made of material with sound-absorbing characteristics (5), defining the entire inner surface of said hollow bearing-element (4),
- completing the construction of said hollow bearing-element (4), depositing a plurality of layers made of material with structural reinforcement characteristics (9) around said layers made of material with sound-absorbing characteristics (5), forming the entire outer surface of said hollow bearing-element (4),
- depositing a plurality of layers forming the casing (3) of the dashboard (1), around said hollow bearing-element (4), and
- depositing another covering layer on said casing (3).

6. A method according to claim 1, wherein said succession of different layers is performed by making a succession of sections of the dashboard (1) having a respective main plane perpendicular to the longitudinal axis of the dashboard (1).

7. A method according to claim 1, wherein said robotic system (2) comprises a multi-material deposition operating head (21), with a system for selecting the required filament.

8. A method according to claim 1, wherein said construction plane (6) comprises a rotatable table (7) designed to orientate the dashboard (1) during its construction, so as to facilitate the material deposition step performed by an operating head (22) and to limit the movements of the robotic system (2) and of the operating head (22).

9. A method according to claim 1, wherein said robotic system (2) comprises a first and a second robot for cooperative construction operations of the dashboard (1) with different materials, simultaneously, so as to simultaneously form said casing (3), and said longitudinal hollow bearing-element (4).

10. A method according to claim 1, wherein said method comprises the step of inserting local reinforcing elements, arranged to facilitate the anchoring of the successive layers to be deposited by means of the robotic system (2).

11. A method according to claim 1, wherein said method comprises the step of inserting, by means of said robotic system (2), respective reinforcing elements arranged at a respective end of the dashboard (1), arranged to provide coupling points for mounting the dashboard (1) on a motor-vehicle body.

12. A method according to claim 1, wherein the deposition of the different layers is made in such a way as to form the dashboard (1) along a substantially vertical direction corresponding to the longitudinal axis of the dashboard (1), so as to limit unwanted deformations of the molten material due to gravity, during deposition of the material.

## Patentansprüche

1. Verfahren zur Herstellung eines Armaturenbretts (1) eines Kraftfahrzeugs mithilfe einer additiven Fertigungstechnologie, wobei die folgenden Schritte vorgesehen sind:
- Einrichten eines robotischen Auftragsystems (2) für eine Vielzahl von Materialien mit einer Schmelzschichtungs- FDM^{™} -Technologie,
- Vorbereiten einer Aufbauebene (6), die dem robotischen System (2) zugeordnet ist und auf die die Vielzahl von Materialien aufgetragen werden, um in dieser Weise das Armaturenbrett (1) herzustellen,
- Betreiben des robotischen Systems (2), um einen Schritt des Auftragens der Vielzahl von Materialien zu starten, um ein erstes Ende (1A) des Armaturenbretts (1) herzustellen, und um das Auftragen der Materialien durch Erzeugen einer Abfolge unterschiedlicher Schichten fortzusetzen, indem Materialien mit unterschiedlichen Arten von Filamenten abgewechselt werden, die mindestens ein Material mit strukturellen Eigenschaften (9) und mindestens ein Material mit schallschluckenden Eigenschaften (5) umfassen,
- wobei die Abfolge unterschiedlicher Schichten ausgehend von dem ersten Ende (1A) entlang einer Richtung ausgeführt wird, die im Wesentlichen der Längsachse des Armaturenbretts (1) entspricht, und
- Fortsetzen des Betriebs des robotischen Systems (2), um das Armaturenbrett (1) als ein einziges monolithisches Element, das aus verschiedenen Materialien besteht, herzustellen, umfassend ein Gehäuse (3), das ein längliches hohles Tragelement (4) einbegreift, das einen zentralen Lüftungskanal definiert, der ausgelegt ist, um weitere Kanalisierungselemente einer Klimaanlage aufzunehmen und eine Funktion der strukturellen Verstärkung des Armaturenbretts (1) zu erfüllen.

2. Verfahren nach Anspruch 1, wobei die Abfolge unterschiedlicher Schichten gemäß den folgenden Schritten ausgeführt wird:
- Auftragen einer aus einem Material mit schallschluckenden Eigenschaften (5) bestehenden ersten Schicht des hohlen Tragelements (4), wobei die erste Schicht einen ersten Abschnitt des hohlen Tragelements (4) definiert,
- Auftragen einer aus einem Material mit strukturellen Verstärkungseigenschaften (9) bestehenden ersten äußeren Schicht, die um die erste Schicht des hohlen Tragelements (4) herum beabstandet ist,
- Fortfahren durch Herstellen eines zweiten Abschnitts des hohlen Tragelements (4) durch Auftragen einer aus einem Material mit strukturellen Verstärkungseigenschaften (9) bestehenden zweiten äußeren Schicht des hohlen Tragelements (4),
- Abschließen der Herstellung des zweiten Abschnitts des hohlen Tragelements (4) durch Auftragen einer aus einem Material mit schallschluckenden Eigenschaften (5) bestehenden zweiten Schicht des hohlen Tragelements (4) innerhalb der zweiten äußeren Schicht des hohlen Tragelements (4), und
- Fortsetzen der Herstellung aufeinanderfolgender Abschnitte des hohlen Tragelements (4) nach der vorgenannten Sequenz, um einen neuen Abschnitt unter Verwendung des zur Fertigstellung des zuvor hergestellten Abschnitts verwendeten letzten Materials zwischen dem Material mit strukturellen Verstärkungseigenschaften (9) und dem Material mit schallschluckenden Eigenschaften (5) zu beginnen.

3. Verfahren nach Anspruch 2, wobei das Verfahren den Schritt des Herstellens eines Gehäuses (3) mit einem strukturellen Verstärkungsmaterial um das hohle Tragelement (4) umfasst.

4. Verfahren nach Anspruch 1, wobei die Vielzahl von Materialien umfasst:
- ein erstes Filament mit strukturellen Eigenschaften;
- ein zweites Filament mit funktionellen schallschluckenden Eigenschaften, um Schwingungen und Geräusche zu absorbieren; und
- ein drittes Filament aus Langfaser mit besseren strukturellen Eigenschaften als denen des ersten Filaments.

5. Verfahren nach Anspruch 1, wobei die Abfolge unterschiedlicher Schichten gemäß den folgenden Schritten ausgeführt wird:
- Auftragen einer Vielzahl von aus einem Material mit schallschluckenden Eigenschaften (5) bestehenden Schichten, die die gesamte Innenfläche des hohlen Tragelements (4) definieren,
- Fertigstellen des Aufbaus des hohlen Tragelements (4) durch Auftragen einer Vielzahl von aus einem Material mit strukturellen Verstärkungseigenschaften (9) bestehenden Schichten um die aus einem Material mit schallschluckenden Eigenschaften (5) bestehenden Schichten, die die gesamte Außenfläche des hohlen Tragelements (4) bilden,
- Auftragen einer Vielzahl von Schichten, die das Gehäuse (3) des Armaturenbretts (1) bilden, um das hohle Tragelement (4), und
- Auftragen einer weiteren Deckschicht auf das Gehäuse (3).

6. Verfahren nach Anspruch 1, wobei die Abfolge unterschiedlicher Schichten durch Herstellen einer Abfolge von Abschnitten des Armaturenbretts (1) ausgeführt wird, die eine jeweilige Hauptebene haben, die perpendikular zur Längsachse des Armaturenbretts (1) ist.

7. Verfahren nach Anspruch 1, wobei das robotische System (2) einen Arbeitskopf (21) zum Auftragen mehrerer Materialien mit einem System zum Auswählen des erforderlichen Filaments umfasst.

8. Verfahren nach Anspruch 1, wobei die Aufbauebene (6) einen drehbaren Tisch (7) umfasst, der zum Ausrichten des Armaturenbretts (1) während seines Aufbaus gestaltet ist, um den von einem Arbeitskopf (22) ausgeführten Materialauftragsschritt zu erleichtern und die Bewegungen des robotischen System (2) und des Arbeitskopfs (22) zu begrenzen.

9. Verfahren nach Anspruch 1, wobei das robotische System (2) einen ersten und einen zweiten Roboter für zusammenwirkende Arbeitsvorgänge zum Aufbauen des Armaturenbretts (1) gleichzeitig mit verschiedenen Materialien umfasst, um gleichzeitig das Gehäuse (3) und das längliche hohle Tragelement (4) auszubilden.

10. Verfahren nach Anspruch 1, wobei das Verfahren den Schritt des Einfügens örtlicher Verstärkungselemente umfasst, die dazu eingerichtet sind, die Verankerung der mithilfe des robotischen Systems (2) aufzutragenden aufeinanderfolgenden Schichten zu erleichtern.

11. Verfahren nach Anspruch 1, wobei das Verfahren den Schritt des Einfügens mithilfe des robotischen Systems (2) von jeweiligen Verstärkungselementen umfasst, die an einem jeweiligen Ende des Armaturenbretts (1) angeordnet und dazu eingerichtet sind, Kopplungspunkte für die Montage des Armaturenbretts (1) auf einen Kraftfahrzeugkörper bereitzustellen.

12. Verfahren nach Anspruch 1, wobei das Auftragen der unterschiedlichen Schichten derart ausgeführt wird, dass das Armaturenbrett (1) entlang einer im Wesentlichen vertikalen Richtung, die der Längsachse des Armaturenbretts (1) entspricht, ausgebildet wird, um unerwünschte Verformungen des geschmolzenen Materials aufgrund der Schwerkraft während des Auftragens des Materials zu begrenzen.

## Revendications

1. Procédé de production d'une planche de bord (1) d'un véhicule automobile au moyen d'une technologie de fabrication additive, dans lequel les étapes suivantes sont envisagées :
- l'agencement d'un système robotique de dépôt (2) pour une pluralité de matériaux avec la technologie de dépôt de fil fondu FDM^{™},
- la préparation d'un plan de construction (6) associé audit système robotique (2), sur lequel il faut déposer ladite pluralité de matériaux, de manière à produire ladite planche de bord (1),
- l'actionnement dudit système robotique (2) afin de commencer une étape de dépôt de ladite pluralité de matériaux pour produire une première extrémité (1A) de la planche de bord (1), et poursuivre le dépôt des matériaux en créant une succession de couches différentes, en alternant des matériaux avec différents types de filaments, comprenant
au moins un matériau à caractéristiques structurelles (9) et au moins un matériau à caractéristiques d'absorption acoustique (5),
- dans lequel ladite succession de couches différentes est effectuée en partant de ladite première extrémité (1A) le long d'une direction correspondant sensiblement à l'axe longitudinal de la planche de bord (1), et
- la poursuite de l'actionnement dudit système robotique (2) afin de produire ladite planche de bord (1) comme un seul élément monolithique réalisé en différents matériaux, comprenant un boîtier (3) incorporant un élément d'appui creux longitudinal (4) définissant un canal de ventilation centrale, conçu pour recevoir d'autres éléments de canalisation d'un système de climatisation et pour assurer une fonction de renforcement structurel de ladite planche de bord (1).

2. Procédé selon la revendication 1, dans lequel ladite succession de couches différentes est effectuée selon les étapes suivantes :
- le dépôt d'une première couche dudit élément d'appui creux (4) réalisée en un matériau à caractéristiques d'absorption acoustique (5), où ladite première couche définit une première section de l'élément d'appui creux (4),
- le dépôt d'une première couche externe réalisée en un matériau à caractéristiques de renforcement structurel (9), espacée autour de ladite première couche dudit élément d'appui creux (4),
- l'étape consistant à procéder à la réalisation d'une deuxième section de l'élément d'appui creux (4) en déposant une deuxième couche externe dudit élément d'appui creux (4) réalisée en un matériau à caractéristiques de renforcement structurel (9),
- l'achèvement de la production de ladite deuxième section de l'élément d'appui creux (4) en déposant une deuxième couche dudit élément d'appui creux (4) réalisée en un matériau à caractéristiques d'absorption acoustique (5), à l'intérieur de ladite deuxième couche externe de l'élément d'appui creux (4), et
- la poursuite de la réalisation de sections successives dudit élément d'appui creux (4) suivant la séquence susmentionnée, afin de commencer une nouvelle section en utilisant le dernier matériau utilisé pour achever la section précédemment réalisée, entre ledit matériau à caractéristiques de renforcement structurel (9) et ledit matériau à caractéristiques d'absorption acoustique (5).

3. Procédé selon la revendication 2, dans lequel ledit procédé comprend l'étape de production d'un boîtier (3) avec un matériau de renforcement structurel, autour dudit élément d'appui creux (4).

4. Procédé selon la revendication 1, dans lequel ladite pluralité de matériaux comprend :
- un premier filament à caractéristiques structurelles ;
- un deuxième filament à caractéristiques d'absorption acoustique fonctionnelles pour absorber les vibrations et les bruits ; et
- un troisième filament, en fibre longue, à caractéristiques structurelles supérieures à celles dudit premier filament.

5. Procédé selon la revendication 1, dans lequel ladite succession de couches différentes est effectuée selon les étapes suivantes :
- le dépôt d'une pluralité de couches réalisées en un matériau à caractéristiques d'absorption acoustique (5), définissant toute la surface interne dudit élément d'appui creux (4),
- l'achèvement de la construction dudit élément d'appui creux (4), en déposant une pluralité de couches réalisées en un matériau à caractéristiques de renforcement structurel (9) autour desdites couches réalisées en un matériau à caractéristiques d'absorption acoustique (5), formant toute la surface externe dudit élément d'appui creux (4),
- le dépôt d'une pluralité de couches formant le boîtier (3) de la planche de bord (1), autour dudit élément d'appui creux (4), et
- le dépôt d'une autre couche de couverture sur ledit boîtier (3).

6. Procédé selon la revendication 1, dans lequel ladite succession de couches différentes est effectuée en réalisant une succession de sections de la planche de bord (1) ayant un plan principal respectif perpendiculaire à l'axe longitudinal de la planche de bord (1).

7. Procédé selon la revendication 1, dans lequel ledit système robotique (2) comprend une tête opérationnelle de dépôt de matériaux multiples (21), avec un système pour sélectionner le filament requis.

8. Procédé selon la revendication 1, dans lequel ledit plan de construction (6) comprend une table rotative (7) conçue pour orienter la planche de bord (1) lors de sa construction, de manière à faciliter l'étape de dépôt de matériau effectuée par une tête opérationnelle (22) et limiter les mouvements du système robotique (2) et de la tête opérationnelle (22).

9. Procédé selon la revendication 1, dans lequel ledit système robotique (2) comprend un premier et un deuxième robots pour des opérations de construction coopératives de la planche de bord (1) avec des matériaux différents, simultanément, de manière à former simultanément ledit boîtier (3), et ledit élément d'appui creux longitudinal (4).

10. Procédé selon la revendication 1, dans lequel ledit procédé comprend l'étape d'insertion d'éléments de renforcement locaux, agencés pour faciliter l'ancrage des couches successives à déposer au moyen du système robotique (2).

11. Procédé selon la revendication 1, dans lequel ledit procédé comprend l'étape d'insertion, au moyen dudit système robotique (2), d'éléments de renforcement respectifs agencés au niveau d'une extrémité respective de la planche de bord (1), agencés pour fournir des points de couplage pour monter la planche de bord (1) sur une carrosserie de véhicule automobile.

12. Procédé selon la revendication 1, dans lequel le dépôt des différentes couches est réalisé de manière à former la planche de bord (1) le long d'une direction sensiblement verticale correspondant à l'axe longitudinal de la planche de bord (1), afin de limiter des déformations indésirables du matériau en fusion dues à la gravité, lors du dépôt du matériau.
